# EUROPEAN PATENT APPLICATION

(11) **EP 3 343 583 A1**
(43) Date of publication of application: **04.07.2018**
(21) Application number: 16839611.7
(22) Date of filing: 24.08.2016
(51) Int. Cl.: H01H 9/54, H01H 9/30, H01H 33/59

(54) **DC CIRCUIT BREAKER**

(30) Priority: 24.08.2015 KR 20150119060
(71) Applicant: Hyosung Corporation, Seoul 04144 (KR)
(72) Inventor: CHUNG, Young Hwan, Changwon-si Gyeongsangnam-do 51531 (KR)
(74) Representative: Viering, Jentschura & Partner mbB Patent- und Rechtsanwälte
(86) International application number: PCT/KR2016/009392
(87) International publication number: WO 2017/034322

(57) **Abstract**

The present invention relates to a DC circuit breaker capable of interrupting a failure current in both directions which flows in a DC transmission line when a failure occurs in the DC transmission line. The DC circuit breaker includes: a first mechanical switch connected to a first DC transmission line at a first side thereof, and connected to a first conductive connecting member at a second side thereof; a second mechanical switch connected to the first conductive connecting member at a first side thereof, and connected to a second DC transmission line at a second side thereof; a first diode connected to the first mechanical switch in parallel; a second diode serially connected to the first diode through the second conductive connecting member, and connected to the second mechanical switch 120 in parallel; and a semiconductor switching circuit switching a flow of a failure current when a failure occurs.

## Description

### Technical Field

The present invention relates to a DC circuit breaker. More particularly, the present invention relates to a DC circuit breaker capable of interrupting a failure current in both directions which flows in a DC transmission line when a failure occurs in the DC transmission line.

### Background Art

A direct current circuit breaker (DC circuit breaker) is used to interrupt a failure current when a failure occurs in a direct current transmission line used as a high voltage transmission line. A direct current transmission line used for a high voltage is used as a transmission line for a high voltage of 50 kV or higher of a high voltage direct current (HVDC) transmission system or a transmission line for a medium voltage of 50 kV or lower of a medium voltage direct current distribution system.

A DC circuit breaker is provided with a relatively inexpensive mechanical switch to interrupt a failure current when a failure occurs on a DC transmission line. The mechanical switch is opened to interrupt a failure current by turning ON/OFF a semiconductor switch connected in serial or parallel when a failure occurs in a high voltage direct current (HVDC) transmission system or a medium voltage direct current distribution system, thereby preventing a faulty system from influencing a normal system.

In a conventional art of US Patent No. 8717716, a number of semiconductor switches is connected to a mechanical switch in a parallel as a main circuit breaker, and a semiconductor switch is serially connected thereto as an auxiliary circuit breaker. However, in the above circuit breaker, the semiconductor switch is maintained in a turn-ON state during a normal operation, thus ON-state loss occurs.

Recently, a number of diodes or semiconductor switches is provided as a DC circuit breaker. For example, in a paper "Solid-State Circuit Breakers and Current Limiters for Medium-Voltage Systems Having Distributed Power Systems"(IEEE Transactions on Power Electronics, Vol. 19, No. 5, September 2004.), a DC circuit breaker configured with four diodes and two semiconductor switches is disclosed. However, in the above DC circuit breaker, the semiconductor switch is maintained in a turn-ON state during a normal state, thus ON-state loss also occurs.

In addition, in US Patent No. 7508636, a DC circuit breaker including an auxiliary breaker circuit in which a number of diodes is connected to a mechanical switch in parallel in a bridge form is disclosed. In the above DC circuit breaker, when opening the switch, the entire interruption speed becomes slow as a threshold resistance value for generating commutation becomes high while conducting a current to an auxiliary breaker circuit having a bridge form, thus the current is conducted relatively slowly.

### Disclosure

### Technical Problem

Accordingly, the present invention has been made keeping in mind the above problems occurring in the prior art, and an object of the present invention is to provide a DC circuit breaker capable of providing a fast interruption speed and preventing ON-state loss during a normal state by using a mechanical switch.

### Technical Solution

In order to accomplish the above object, the present invention provides a DC circuit breaker including: a first mechanical switch connected to a first DC transmission line at a first side thereof, and connected to a first conductive connecting member at a second side thereof; a second mechanical switch connected to the first conductive connecting member at a first side thereof, and connected to a second DC transmission line at a second side thereof; a first diode connected to the first mechanical switch in parallel by being connected to a first branch line branched from the first DC transmission line; a second diode serially connected to the first diode through the second conductive connecting member, and connected to the second mechanical switch in parallel by being connected to a second branch line branched from the second DC transmission line; and a semiconductor switching circuit switching a flow of a failure current when a failure occurs by being installed in a transmission line between the first conductive connecting member and the second conductive connecting member.

In the present invention, in the semiconductor switching circuit, at least one semiconductor switch may be serially connected in the same direction.

In the present invention, in the semiconductor switching circuit, a non-linear resistor may be connected to each semiconductor switch in parallel.

In the present invention, a number of semiconductor switches may be proportional to a size of a voltage across both sides of the first DC transmission line and the second DC transmission line.

In the present invention, the first diode may be connected to the first branch line at a cathode thereof, and connected to the second conductive connecting member at an anode thereof, and the second diode is connected to the second branch line at a cathode thereof, and connected to the second conductive connecting member at an anode thereof.

In the present invention, the first and second mechanical switches may maintain close states during a normal operational state, and when a failure occurs in the first DC transmission line, the first mechanical switch may be opened and the semiconductor switch may be turned ON so that a failure current may be conducted through the second mechanical switch, the semiconductor switch, and the first diode.

Herein, the semiconductor switch may be turned OFF after a preset time elapses after the failure current is conducted so that the failure current may be provided to the non-linear resistor.

In the present invention, the first and second mechanical switches may maintain close states during a normal state, and when a failure occurs in the second DC transmission line, the second mechanical switch may be opened and the semiconductor switch 151 may be turned ON so that a failure current may be conducted through the first mechanical switch, the semiconductor switch, and the second diode.

Herein, the semiconductor switch may be turned OFF after a preset time elapses after the failure current is conducted so that the failure current may be provided to the non-linear resistor.

### Advantageous Effects

As described above, a fast interruption speed can be implemented when a failure occurs by implementing a DC circuit breaker in a bridge form by using a mechanical switch and a semiconductor switch.

In addition, ON-state loss in the semiconductor switch does not occur since a current passes through the mechanical switch during a normal operation.

### Description of Drawings

FIG. 1 is a view showing a circuit diagram of a DC circuit breaker according to an embodiment of the present invention.
FIG. 2 is a view showing a current flow during a normal state according to an embodiment of the present invention.
FIG. 3 is a view showing a current flow during a normal state according to another embodiment of the present invention.
FIG. 4 is a view showing a current flow when a failure occurs on a first side according to an embodiment of the present invention.
FIG. 5 is a view showing a current flow when a failure occurs on a second side according to an embodiment of the present invention.

### Mode for Invention

Hereinafter, exemplary embodiments of the present invention will be described in detail with reference to accompanying drawings. In assigning reference numerals to elements in each drawing, it shall be noted that like elements have like reference numerals as much as possible even if illustrated in different drawings. In describing the present invention, a detailed description of relevant known configurations or functions will be omitted if it is determined that such descriptions may make the substance of the present invention unclear.

In addition, in describing elements of the present invention, terms such as first, second A, B, (a), (b) and others may be used. Such terms are used only for purposes of distinguishing an element from other element, but do not limit the substance of the element, sequence or order. If it is stated that a certain element is "connected" or "coupled" to or "contacts" with another element, it should be understood that the certain element may be directly connected or coupled to the another element, but also another element may be "connected" or "coupled" to or "contacts" with such elements.

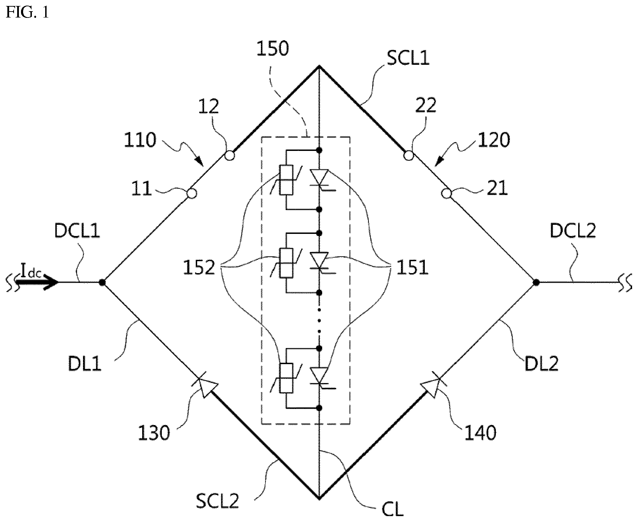

FIG. 1 is a view showing a circuit diagram of a DC circuit breaker according to an embodiment of the present invention.

Referring to FIG. 1, a DC circuit breaker 100 according to the present invention is configured by including a first mechanical switch 110, a second mechanical switch 120, a first diode 130, a second diode 140, and a semiconductor switching circuit 150.

The first mechanical switch 110 is connected to a first DC transmission line DCL1 at a first side thereof, and connected to a first conductive connecting member SCL1 at a second side thereof. The second mechanical switch 120 is connected to the first conductive connecting member SCL1 at a first side thereof, and connected to a second DC transmission line DCL2 at a second side thereof.

The first diode 130 is connected to the first mechanical switch 110 in parallel by being connected to a first branch line DL1 that is branched from the first DC transmission line DCL1. In addition, the second diode 140 is serially connected to the first diode 130 through a second conductive connecting member SCL2, and is connected to the second mechanical switch 120 in parallel by being connected to a second branch line DL2 branched from the second DC transmission line DCL2.

The semiconductor switching circuit 150 switches a flow of a failure current when a failure occurs by being installed in a transmission line CL between the first conductive connecting member SCL1 and the second conductive connecting member SCL2. In other words, the semiconductor switching circuit 150 temporally provides the failure current provided from the first mechanical switch 110 or the second mechanical switch 120 to the second diode 140 or the first diode 130 by conducting the failure current when a failure occurs, and then interrupts the failure current by performing a switching operation.

In below, the configuration of the DC circuit breaker 100 according to the present invention will be described in detail.

As shown in FIG. 1, the first mechanical switch 110 is configured with a contacting terminal 11 and a switching contacting terminal 12. The contacting terminal 11 provides a normal current I_{dc} to the switching contacting terminal 12 when the first mechanical switch 110 is in a close state and the normal current I_{dc} is provided through the first DC transmission line DCL1 as the first DC transmission line DCL1 is connected to the first side of the first mechanical switch 110. The switching contacting terminal 12 transfers the normal current I_{dc} provided from the contacting terminal 11 to the first conductive connecting member SCL1 as the first conductive connecting member SCL1 is connected to the second side of the first mechanical switch 110. Alternatively, the switching contacting terminal 12 provides the normal current I_{dc} to the contacting terminal 11 when the first mechanical switch 110 is in a close state and the normal current I_{dc} is provided through the first conductive connecting member SCL1. The contacting terminal 11 transfers the normal current I_{dc} to the first DC transmission line DCL1. Herein, the first mechanical switch 110 is opened when a failure occurs in the first DC transmission line DCL1. In other words, when a failure occurs in the first DC transmission line DCL1, a connection state between the contacting terminal 11 and the switching contacting terminal 12 is released and opened so that a failure current flowing to the first DC transmission line DCL1 is interrupted.

The second mechanical switch 120 is configured with a contacting terminal 21 and a switching contacting terminal 22. The contacting terminal 21 transfers a normal current I_{dc} to the switching contacting terminal 22 when the second mechanical switch 120 is in a close state and the normal current I_{dc} is provided from the second transmission line DCL2 as the second transmission line DCL2 is connected to the first side of the second mechanical switch 120. The switching contacting terminal 22 transfers the normal current I_{dc} provided from the contacting terminal 21 to the first conductive connecting member SCL1 as the first conductive connecting member SCL1 is connected to the second side of the second mechanical switch 120. Alternatively, the switching contacting terminal 22 provides the normal current I_{dc} to the contacting terminal 21 when the second mechanical switch 120 is in a close state and the normal current I_{dc} is provided through the first conductive connecting member SCL1, and the contacting terminal 21 transfers the normal current I_{dc} to the second DC transmission line DCL2. Herein, when a failure occurs in the second DC transmission line DCL2, the mechanical switch 120 is opened. In other words, when a failure occurs in the second DC transmission line DCL2, a connection state between the contacting terminal 21 and the switching contacting terminal 22 is released and opened so that a failure current flowing to the second DC transmission line DCL2 is interrupted.

The first diode 130 is connected to the first mechanical switch 110 in parallel by being connected to the first branch line DL1 branched from the first DC transmission line DCL1 in a direction to the first DC transmission line DCL1. In other words, a cathode K of the first diode 130 is connected to the first branch line DL1, and an anode A thereof is connected to the second conductive connecting member SCL2. In addition, the second diode 140 is serially connected to the first diode 130 through the second conductive connecting member SCL2, and is connected to the second DC transmission line DCL2 in parallel by being connected to the second branch line DL2 branched from the second DC transmission line DCL2 in a direction to the second DC transmission line DCL2. In other words, a cathode K of the second diode 140 is connected to the second branch line DL2, and an anode A thereof is connected to the second conductive connecting member SCL2. In the present invention, as the first and second conductive connecting members SCL1 and SCL2, transmission lines of the first and second DC transmission lines DCL1 and DCL2 may be identically used. For example, it may be implemented by using, a metal line, a copper line, etc.

As shown in FIG. 1, the semiconductor switching circuit 150 is installed in the transmission line CL between the first conductive connecting member SCL1 and the second conductive connecting member SCL2, and includes at least one semiconductor switch 151 serially connected from each other. For each of the semiconductor switches 151, a non-linear resistor 152 is connected thereto in parallel. Herein, each of the semiconductor switches 151 is serially connected in the same direction. The semiconductor switch 151 is an element wherein turn-On/turn-OFF thereof is controlled, and switches a failure current when a failure occurs in one side. In the present invention, the semiconductor switch 151 may be implemented, for example, by using an insulated gate bipolar transistor (IGBT), an insulated gate-commutated thyristor (IGCT), a gate-turn-off thyristor (GTO), a gate commutated turn-off (GCT), etc. In addition, switching operations of the first and second mechanical switches 110 and 120, and the semiconductor switch 151 are implemented by a control operation of a controller that is additionally provided (not shown). In addition, the controller controls turn-ON and turn-OFF of the semiconductor switch 151 according to a generation of a failure current, and switches the semiconductor switch 151 to be turned-ON and turned-OFF at a predetermined time by checking turning-ON and turning-OFF times of the semiconductor switch 151.

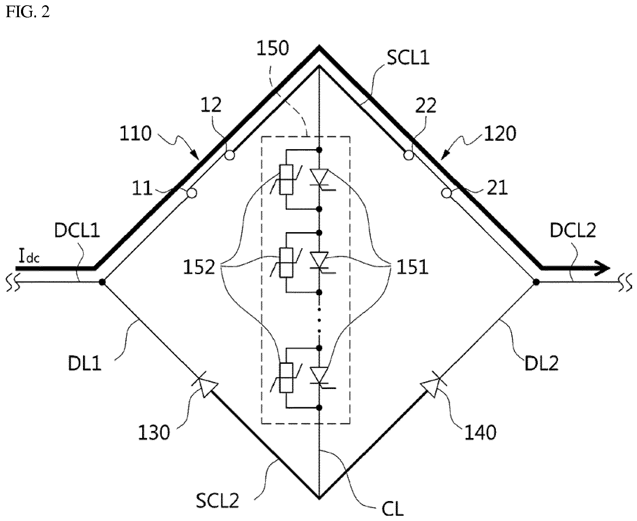

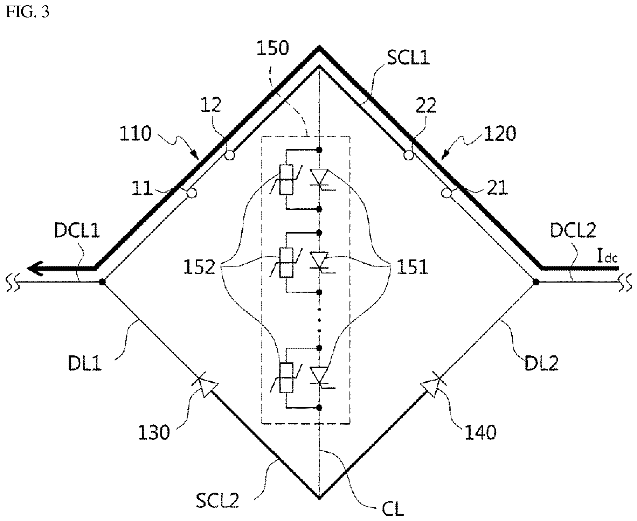

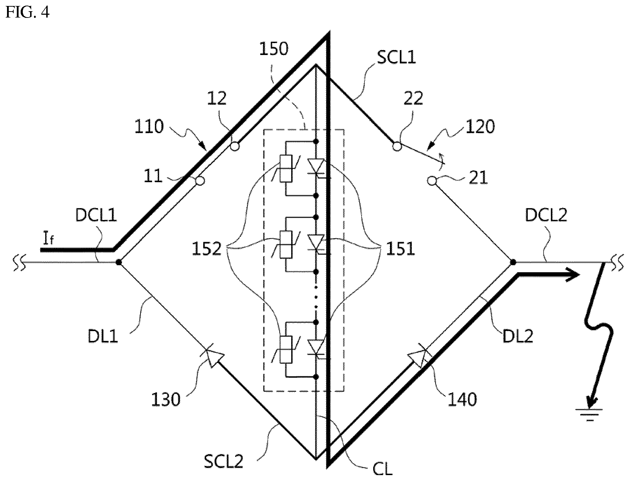

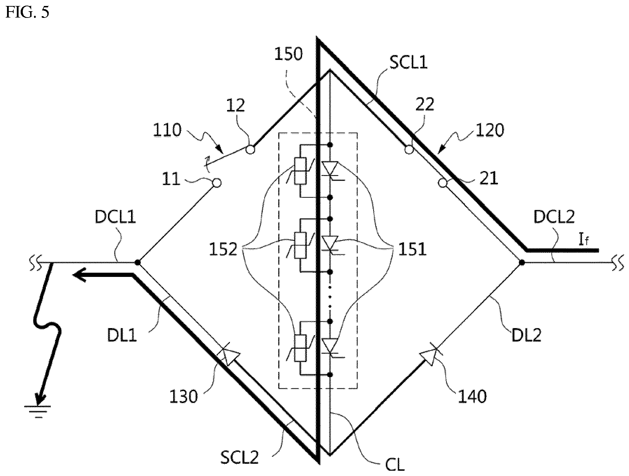

In below, an operation of the DC circuit breaker 100 of the present invention which has the above configuration will be described with reference to accompanied FIGS. 2 to 4. FIG. 2 is a view showing a current flow during a normal state according to an embodiment of the present invention, FIG. 3 is a view showing a current flow during a normal state according to another embodiment of the present invention, FIG. 4 is a view showing a current flow when a failure occurs on a first side according to an embodiment of the present invention, and FIG. 5 is a view showing a current flow when a failure occurs on a second side according to an embodiment of the present invention.

First, FIG. 2 is a view showing an example in which a current is provided from the first DC transmission line DCL1 to the second DC transmission line DCL2. As shown in the figure, in case of a normal state, when a normal current I_{dc} is provided through the first DC transmission line DCL1, the contacting terminals 11 and 21 and the switching contacting terminals 12 and 22 which are provided in the respective first mechanical switch 110 and the second mechanical switch 120 become connected states from each other. In other words, the normal current I_{dc} is provided from the first DC transmission line DCL1 to the second DC transmission line DCL2 through the first and second mechanical switches 110 and 120 as both of the first mechanical switch 110 and the second mechanical switch 120 are in close states, and at least one semiconductor switch 151 of the semiconductor switching circuit 150 is a turn-ON state.

FIG. 3 is a view showing another example in which a current is provided from the second DC transmission line DCL2 to the first DC transmission line DCL1. As shown in FIG. 3, in case of a normal state, when a normal current I_{dc} is provided through the second DC transmission line DCL2, the contacting terminals 11 and 21 and the switching contacting terminals 12 and 22 which are provided in the respective first mechanical switch 110 and second mechanical switch 120 are in connected states, the first mechanical switch 110 and the second mechanical switch maintain close states, and at least one semiconductor switch 151 of the semiconductor switching circuit 150 is in a turn-OFF state. Accordingly, the normal current I_{dc} is provided to from the second DC transmission line DCL2 to the first DC transmission line DCL1 through the second mechanical switch 120) and the first mechanical switch 110.

FIG. 4 is a view showing an example in which a failure occurs in the second DC transmission line DCL2 while a current is provided from the first DC transmission line DCL1 to the second DC transmission line DCL2. When a failure occurs in the second DC transmission line DCL2 in a normal state, the first mechanical switch 110 maintains a close state, the second mechanical switch 120 is rapidly opened and the semiconductor switch 151 is switched to a turn-ON state, thus a failure current I_{f} provided from the first DC transmission line DCL1 is temporally provided to flow through the first mechanical switch 110, the semiconductor switch 151, and the second diode 140. Then, after a preset time, the semiconductor switch 151 is switched to a turn-OFF state, thus the flow of the failure current I_{f} is interrupted in the semiconductor switch 151. Herein, when the failure current I_{f} is interrupted in the semiconductor switch 151, a voltage across the first DC transmission line DCL1 is relatively and rapidly increased compared to a voltage across the second DC transmission line DCL2. Herein, the failure current I_{f} is provided to the non-linear resistor 152 so that the increased voltage of the first DC transmission line DCL1 is consumed in the non-linear resistor 152 connected to the semiconductor switch 151 in parallel. Thus, a circuit protection and reliable interruption may be available. As described above, the non-linear resistor 152 is an element for protecting the semiconductor switch 151 from being applied with an excessive voltage equal to or greater than a rated voltage at both sides thereof when the failure current is interrupted in the semiconductor switch 151. When a high voltage being equal to or greater than a preset condition is applied to both sides of the semiconductor switch 151 due to the failure, the semiconductor switch 151 is automatically turned ON to consume the high voltage. In the present example, the non-linear resistor 152 may be implemented, for example, by using a varistor.

In FIG. 5, an example in which a failure occurs in the first DC transmission line DCL1 while providing a current from the second DC transmission line DCL2 to the first DC transmission line DCL1 is shown. When a failure occurs in the first DC transmission line DCL1 in a normal state, the second mechanical switch 120 maintains a close state, the first mechanical switch 110 is rapidly opened, and the semiconductor switch 151 is switched to a turn-ON state, thus a failure current provided from the second DC transmission line DCL2 is temporally provided to flow through the second mechanical switch 120, the semiconductor switch 151, and the first diode 130. Then, after a preset time, the semiconductor switch 151 is switched to a turn-OFF state, thus the flow of the failure current I_{f} is interrupted. Herein, when the failure current I_{f} is interrupted in the semiconductor switch 151, a voltage of the second DC transmission line DCL2 is relatively and rapidly increased compared to a voltage of the first DC transmission line DCL1. Herein, the failure current I_{f} is provided to the non-linear resistor 152 so that the increased voltage of the second DC transmission line DCL2 is consumed in the non-linear resistor 152 connected to the semiconductor switch 151 in parallel. Thus, a circuit protection and reliable interruption may be available.

Herein, when the failure current is interrupted in the semiconductor switch 151 in FIGS. 4 and 5, the semiconductor switch 151 is formed to have a withstanding voltage enough for withstanding a high voltage due to the failure current. For this, in order to withstand a voltage due to the failure current, it is preferable to determine a number of semiconductor switches 151 to be proportional to a size of the failure current.

As described above, a manufacturing cost can be reduced since the DC circuit breaker of the present invention performs interruption at both directions in the DC transmission line by using two mechanical switches, two diodes, and at least one semiconductor switch and non-linear resistor. In addition, ON-state loss during a normal state is reduced than a conventional technique.

Even though all of elements of the exemplary embodiments according to the present invention have been described as being coupled or as being coupled and operating as one element, the present invention is not limited to the exemplary embodiments. That is, to the extent of the purpose of the present invention, all of such elements may be selectively coupled and operate as one or more elements. Terms such as "include", "form", or "have" as described above mean that a concerned element may be inherent in the concerned element unless there is any statement specifically to the contrary. In this regard, such terms should be interpreted that the elements may further include other elements instead of excluding other elements. All terms including technical or scientific terms have the same meaning as generally understood by the person having the typical knowledge in the technical field to which the present invention belongs unless otherwise defined. Terms which are generally used as terms defined in a dictionary should be interpreted as being consistent with the meaning in context of the relevant technology and will not be interpreted as idealistic or excessively formal meaning.

Although a few exemplary embodiments have been shown and described, it will be appreciated by those skilled in the art that changes may be made in these exemplary embodiments without departing from the principles and spirit of the invention, the range of which is defined in the appended claims and their equivalents. Accordingly, the exemplary embodiments of the present invention are provided to explain the technical spirit of the present invention but not to limit such spirit. The scope of the technical spirit of the present invention is not limited by the exemplary embodiments of the present invention. The scope of protection of the present invention should be interpreted by the claims below, and all technical spirits which are in the same scope would be interpreted as being included in the scope of right of the present invention.

## Claims

1. A DC circuit breaker, comprising:
a first mechanical switch (110) connected to a first DC transmission line (DCL1) at a first side thereof, and connected to a first conductive connecting member (SCL1) at a second side thereof;
a second mechanical switch (120) connected to the first conductive connecting member (SCL1) at a first side thereof, and connected to a second DC transmission line (DCL2) at a second side thereof;
a first diode (130) connected to the first mechanical switch (110) in parallel by being connected to a first branch line (DL1) branched from the first DC transmission line (DCL1) ;
a second diode (140) serially connected to the first diode (130) through the second conductive connecting member (SCL2), and connected to the second mechanical switch (120) in parallel by being connected to a second branch line (DL2) branched from the second DC transmission line (SCL2); and
a semiconductor switching circuit (150) switching a flow of a failure current when a failure occurs by being installed in a transmission line (CL) between the first conductive connecting member (SCL1) and the second conductive connecting member (SCL2).

2. The DC circuit breaker of claim 1, wherein in the semiconductor switching circuit (150), at least one semiconductor switch (151) is serially connected in the same direction.

3. The DC circuit breaker of claim 2, wherein in the semiconductor switching circuit (150), a non-linear resistor (152) is connected to each semiconductor switch (151) in parallel.

4. The DC circuit breaker of claim 3, wherein a number of semiconductor switches (151) is proportional to a size of a voltage across both sides of the first DC transmission line (DCL1) and the second DC transmission line (DCL2).

5. The DC circuit breaker of claim 3, wherein the first diode (130) is connected to the first branch line (DL1) at a cathode (K) thereof, and connected to the second conductive connecting member (SCL2) at an anode (A) thereof, and the second diode 140 is connected to the second branch line (DL2) at a cathode (K) thereof, and connected to the second conductive connecting member (SCL2) at an anode (A) thereof.

6. The DC circuit breaker of claim 3, wherein the first and second mechanical switches (110) and (120) maintain close states during a normal operational state, and when a failure occurs in the first DC transmission line (DCL1), the first mechanical switch (110) is opened and the semiconductor switch (151) is turned ON so that a failure current is conducted through the second mechanical switch (120), the semiconductor switch (151), and the first diode (130).

7. The DC circuit breaker of claim 6, wherein the semiconductor switch (151) is turned OFF after a preset time elapses after the failure current is conducted so that the failure current is provided to the non-linear resistor (152).

8. The DC circuit breaker of claim 3, wherein the first and second mechanical switches (110) and (120) maintain close states during a normal state, and when a failure occurs in the second DC transmission line (DCL1), the second mechanical switch (120) is opened and the semiconductor switch 151 is turned ON so that a failure current is conducted through the first mechanical switch (110), the semiconductor switch (151), and the second diode (140).

9. The DC circuit breaker of claim 8, wherein the semiconductor switch (151) is turned OFF after a preset time elapses after the failure current is conducted so that the failure current is provided to the non-linear resistor (152).
